## Europäisches Patentamt

## European Patent Office

## Office européen des brevets

(19)

(11) Numéro de publication: **0 097 080**
**B1**

(12) # FASCICULE DE BREVET EUROPÉEN

(45) Date de publication du fascicule du brevet:
**23.07.86**

(21) Numéro de dépôt: **83401124.9**

(22) Date de dépôt: **03.06.83**

(51) Int. Cl.⁴: **E 21 B 43/36,** E 21 B 43/12,
E 21 B 34/16

(54) Système de production des gisements sous-marins de fluides.

(30) Priorité: **08.06.82 FR 8209976**

(43) Date de publication de la demande:
**28.12.83 Bulletin 83/52**

(45) Mention de la délivrance du brevet:
**23.07.86 Bulletin 86/30**

(84) Etats contractants désignés:
**AT BE CH DE FR GB IT LI LU NL SE**

(56) Documents cité:
**FR-A-1 297 367**
**FR-A-1 587 391**
**FR-A-2 157 733**

(73) Titulaire: **Chaudot, Gérard, 14, Allée de la
Rochefoucauld, F-78570 Andresy (FR)**

(72) Inventeur: **Chaudot, Gérard, 14, Allée de la
Rochefoucauld, F-78570 Andresy (FR)**

(74) Mandataire: **Jolly, Jean- Pierre, Cabinet BROT et
JOLLY 83, rue d'Amsterdam, F-75008 Paris (FR)**

EP 0 097 080 B1

LIBER, STOCKHOLM 1986

## Description

La présente invention concerne un système d'exploitation destiné à initier (c'est-à-dire permettre l'exploitation de puits qui ne produisent pas naturellement) et/ou à moduler la production des puits tout en permettant d'augmenter la récupération des fluides en place dans un gisement, en particulier en mer (offshore).

D'une manière générale, on sait que les gisements d'hydrocarbures, situés en mer, nécessitent, pour leur exploitation, la mise en place d'une liaison, entre le gisement et les installations de transport et de stockage des fluides exploités. Cette liaison est en général composée de puits équipés de têtes de production sous-marines et/ou aériennes, de canalisation de collecte de l'effluent entre les têtes de production et les installations de séparation et/ou de traitement qui peuvent être de très courte longueur si ces installations sont situées à proximité des têtes de production, des installations de production proprement dites permettant le triage des différentes phases de l'effluent et des moyens d'évacuation vers un stokage du (ou des) produits extraits du gisement. Les moyens précédemment décrits sont généralement, au moins en partie concentrés dans une ou plusieurs structures fixées au fond de la mer, ou sont rassemblés dans les ponts de structures flottantes.

Selon le débit, la nature de l'effluent et les conditions d'environnement extérieur, ou aboutit souvent à des impasses technologiques qui conduisent à abandonner le développement d'une découverte. Parmi ces impasses technologiques, on peut citer:

— L'incapacité d'assurer ou de maintenir des débits de puits permettant de rentabiliser l'exploitation

— L'obligation d'abandonner l'exploitation prématurément alors qu'une partie importante des fluides reste en place dans le gisement

— L'impossibilité d'assurer l'exploitation normale tout au long de l'année du fait de l'interférence du milieu extérieur.

— Enfin, dès lors que la profondeur d'eau devient importante et les conditions d'envir sèvères, l'adaptation des technologies existantes conduit à des installations si importantes qu'elles ne sont réservées qu'à l'exploitation de gros gisements, ou si aléatoires qu'elles ne permettent que de les écrémer périodiquement. De toutes façons, la régulation des débits et pressions, et les limitations de ces derniers imposées par le niveau élevé de sécurité requis par ces installations confinées, concourent à les rendre complexes et nécessitent une main-d'oeuvre très qualifiée pour les opérer et les surveiller, même pour des gisements situés dans de faibles profondeurs d'eau.

Il existe également des gisements situés sous une faible épaisseur de mort-terrains et dont la pression de fond est relativement peu élevée, ceci quelle que soit la profondeur d'eau, et qui mettent en échec partiel ou total la technologie de développement par forages déviés, à partir de têtes de puits regroupées dans un support. Certains gisements sont même situés dans des zones où la surface de la mer est encombrée par la circulation maritime, ou est obstruée partiellement par des objets flottants tels que icebergs, banquise, épaves et bois flottés. Ces configurations associées parfois avec de très mauvaises conditions de visibilité ou de détection, conduisent à une probabilité de collision importante si tout ou partie des installations est localisée dans l'interface air-mer.

Par le brevet FR—A—2 157 733, on connaît un système selon le préambule de la revendication 1. Le séparateur entoure un caisson étanche solidaire d'une embase ancrée sur le fond marin et dans lequel débouchent des conduits reliés au puits sous-marin. Ledit caisson est surmonté d'une colonne tubulaire verticale flottante dont le canal intérieur communique avec l'intérieur du caisson et sert à loger les moyens d'évacuation du gaz et de la phase liquide. Des régulateurs classiques sont prévus pour contrôler la pression ainsi que le niveau du liquide dans le séparateur.

Un tel séparateur est très complexe puisqu'il nécessite l'utilisation d'un caisson étanche. De plus, il impose pour sa réalisation une colonne verticale à flottabilité toujours positive.

L'invention a donc pour but de supprimer les inconvénients des systèmes selon la technique antérieure signalée.

Elle propose donc un système d'exploitation constitué par tout ou partie d'un ensemble d'éléments qui, selon les caractéristiques d'un gisement, de son effluent et de leurs variations durant la vie du gisement, aussi bien que des caractéristiques du milieu surplombant le gisement, concourra à:

— se dispenser de l'utilisation d'un caisson étanche,

— à éviter l'obligation de relier verticalement le séparateur à une installation située au-dessus de la mer, mais à permettre au contraire de raccorder le séparateur à des installations aériennes situées à une très grande distance, par exemple sur la côte;

— permettre d'abaisser la pression en tête des puits sous-marins jusqu'à une pression très basse, voire voisine de la pression atmosphérique quelle que soit la profondeur de la mer à l'aplomb du gisement et ainsi augmenter la récupération des fluides en place dans le gisement;

— permettre d'optimiser la pression en tête et le débit de chaque puits en fonction des caractéristiques du gisement au droit de chacun d'eux et des conditions économiques;

— autoriser la mise en production de puits ou de gisements situés en mer très profonde;

— ne prendre en compte que dans une faible mesure les aléas de production générés par les conditions de surface à l'aplomb du gisement;

— simplifier les opérations de production, tout en améliorant les conditions de sécurité liées à ces opérations;

— et plus généralement enfin, permettre l'exploitation de gisements qui seraient inexploitables par des méthodes classiques pour des raisons économiques ou technologiques.

Le système selon l'invention est conforme à la partie caractérisante de la revendication 1.

Le ballon dégazeur présente la propriété de flotter dans l'eau à partir du moment où il est partiellement ou totalement plein d'air ou de gaz et de couler s'il est partiellement ou totalement plein de liquides. En tout état de cause, il est conçu de manière à subir des variations de poids détectables quand le niveau de liquide fluctue à l'intérieur de celui-ci. En outre, sa fixation au fond de la mer et aux canalisations qui lui sont raccordées devront permettre un débattement sensible ou une variation de contraintes actionnant directement ou indirectement des organes permettant de réguler le débit de l'effluent et/ou le débit de fluide moteur et/ou l'intensité ou le voltage du courant électrique alimentant l'organe de relevage de l'effluent liquide depuis la sortie du ballon-dégazeur jusqu'aux installations de surface situées à l'aplomb dudit ballon ou à distance.

La sortie de gaz du ballon-dégazeur est reliée à la surface par une canalisation flexible ou rigide équipée, à son extrémité supérieure, d'une vanne de contrôle de pression ou d'un clapet taré réglable permettant de faire varier la consigne de pression à l'intérieur du ballon-dégazeur depuis la pression initiale en tête de production jusqu'à une pression voisine de la pression atmosphérique au niveau du ballon-dégazeur, compte tenu de la densité de l'effluent gazeux dans la susdite canalisation. Le point d'émergence de la canalisation d'échappement de gaz pourra être différent du point d'émergence de la sortie de la canalisation d'effluent liquide.

La sortie d'effluent liquide du ballon-dégazeur est donc reliée à un organe de relevage constitué par exemple d'une pompe centrifuge à un ou plusieurs étages ou d'une pompe alternative à déplacement positif, entraînée par moteur électrique à vitesse variable ou non, ou par moteur hydraulique. Ce moteur hydraulique peut être constitué par exemple d'une turbine dont le fluide moteur pourra être de l'effluent partiellement ou totalement traité en surface et repompé jusqu'au moteur hydraulique de la pompe de relevage de l'effluent, par une canalisation flexible ou rigide. A la sortie du moteur hydraulique de fond le fluide moteur peut être remélangé à l'effluent liquide sortant de la pompe de relevage ou recirculé jusqu'en surface par une canalisation séparée.

Dans tous les cas, ce procédé peut être conjugué, selon le problème à résoudre, avec l'injection dans le puits ou en tête de celui-ci, d'agents chimiques, de fluides calloporteurs ou d'hydrocarbures légers ayant pour but de favoriser l'écoulement de l'effluent et de diminuer sa densité, et plus généralement d'améliorer la productivité des puits.

On obtient bien ainsi un procédé simple permettant d'abaisser la pression en tête de puits à une valeur très basse, quelle que soit la profondeur d'eau dans laquelle baigne la susdite tête de puits, et dont le contrôle pourra être effectué depuis la surface, même si la distance, entre la tête de puits et ce point de contrôle, est grande. Le débit de l'effluent du puits, fonction de la susdite pression en tête, est évacué par un moyen de relevage dont le débit sera auto-piloté par la variation de flottabilité du ballon-dégazeur séparant les phases liquide et gazeuse de l'effluent. La capacité d'évacuation dudit moyen de relevage pourra être maximum lorsque le ballon-dégazeur est plein de liquides.

Le ballon-dégazeur ainsi que tous les éléments concourant à ses liaisons et à son fonctionnement seront calculés pour résister au moins à la pression extérieure correspondant à la profondeur à laquelle ils seront installés, d'une part, et d'autre part, calculés pour résister à la pression intérieure pouvant régner dans ceux-ci, compte tenu de la pression extérieure qu'ils subiront au lieu de leur installation ou pendant les manoeuvres de mise en place ou de relevage.

Le ballon-dégazeur et tout ou partie des éléments concourant à son fonctionnement, en particulier le moyen de pompage de la partie liquide de l'effluent, pourront être relevables depuis la surface, simultanément ou indépendamment les uns des autres pour contrôle entretien ou échange. Leur fixation et les étanchéités pourront être réalisées par filetages, colliers boulonnés, systèmes à bayonnettes, chiens d'ancrage, garnitures en chevrons et blocs élastiques ou plastiques (packer) de types semblables à ceux utilisés dans les puits d'exploitation ou autres.

Des modes de réalisations de l'invention seront décrit ci-après, à titre d'exemples non limitatifs, avec référence aux dessins annexés dans lesquels:

— La figure 1 est une représentation schématique d'une première installation utilisant le système d'exploitation selon un premier exemple de réalisation et dans lequel toutes les canalisations de raccordement aboutissent en surface en un même lieu.

— La figure 2 est une représentation schématique d'une deuxième installation bénéficiant d'un amortissement des mouvements du ballon-séparateur et dans laquelle les raccordements en surface aboutissent en deux lieux différents, le fluide moteur circulant dans des canalisations séparées de celles utilisées pour transporter l'effluent du puits.

— La figure 3 est une représentation schématique d'une troisième installation dans laquelle le ballon-séparateur est articulé sur son support par une charnière d'axe horizontal, les débattements du ballon-séparateur étant autorisés par la flexibilité de ses raccordements.

— La figure 4 est une représentation schématique d'une quatrième installation dans laquelle tous les éléments sont rassemblés autour d'un axe vertical qui peut être celui de la tête de puits.

— La figure 5 est une représentation schématique d'une cinquième installation dans laquelle le fluide moteur de relevage des liquides produits, est du gaz, et dont la régulation est effectuée par un système à tiroir de distribution.

— La figure 6 est une représentation schématique d'une sixième installation dont le principe est semblable à celui utilisé dans la cinquième installation mais autorisant le débit continu du ou des puits qui y sont raccordés.

— La figure 7 est une représentation schématique d'une septième installation dans laquelle le ballon-dégazeur est fixé sur l'embase lest, mais qui peut subir des déformations élastiques sous l'effet des variations de flottabilité et qui est de forme telle qu'elle permette une large surface d'échange afin de refroidir l'effluent du puits.

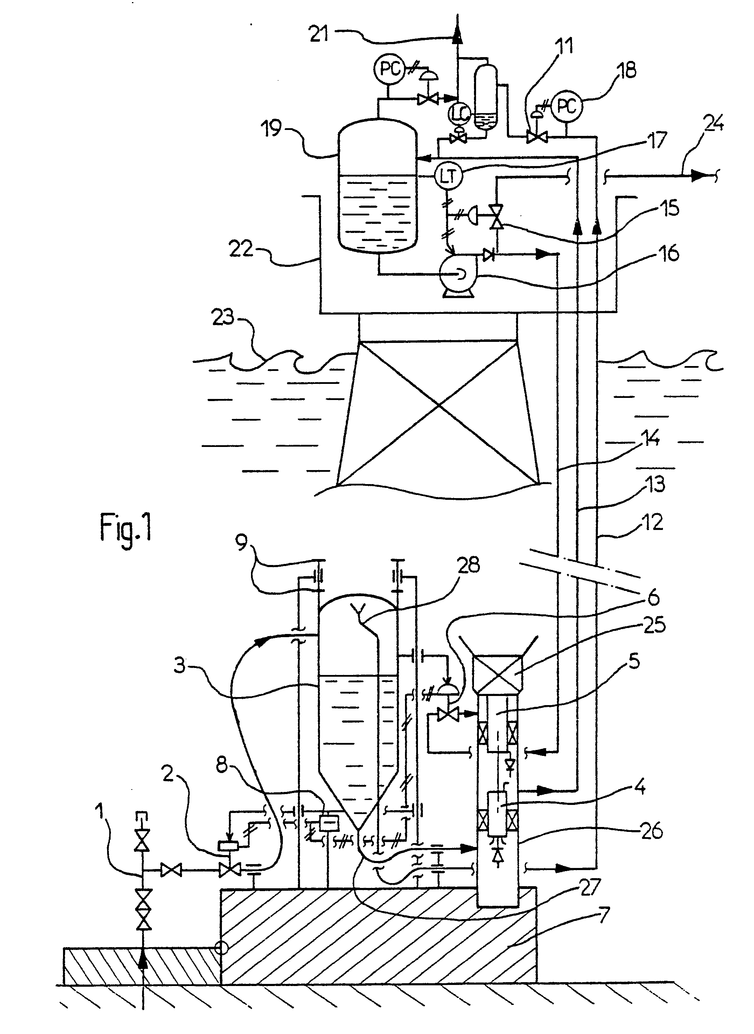

Avec référence à la figure 1, l'installation comporte un (ou plusieurs) puits de production 1 relié à un ballon-dégazeur 3 par une canalisation partiellement flexible équipée, côté tête de production sous-marine, d'une vanne de sectionnement de sécurité 2. Le ballon-dégazeur 3, lui-même sous-marin, a une flottabilité variant avec le niveau liquide à l'intérieur de celui-ci, et peut se translater verticalement sur des guidages équipés de butées hautes et basses 9. La sortie des liquides 27 du ballon-dégazeur 3, elle aussi partiellement, flexible est reliée à l'aspiration d'une pompe 4 entrainée par moteur hydraulique 5. Le fluide moteur amené par une canalisation 14 est remélangé à la sortie du moteur 5 avec l'effluent liquide provenant du ballon-dégazeur 3 à la sortie de la pompe de relevage 4 et le tout est acheminé, à l'entrée d'une installation de séparation traitement située en surface et représentée par un ballon-séparateur 19, par une canalisation 13. Le fluide moteur est une partie du débit d'effluent recyclé après séparation traitement et dont la pression sera relevée par une pompe 16, l'excédent le liquide représentant la production étant évacué par une canalisation 24 équipée d'une vanne de régulation 15 pilotée, par exemple par le détecteur de niveau 17 dans le ballon-séparateur 19. La variation de flottabilité ou les mouvements verticaux du ballon-dégazeur 3 pilotent directement ou indirectement, par l'intermédiaire d'une vanne de régulation 6, le débit de liquide moteur dans le moteur hydraulique 5 entrainant la pompe de relevage 4.

La sortie gaz 28 du ballon-dégazeur 3, elle même partiellement flexible, est raccordée à l'atmosphère ou a toute installation de récupération de l'effluent gazeux par une canalisation 12, 21 équipée d'une vanne de régulation de pression 11 pilotée par un détecteur de pression amont 18, ou d'un clapet taré équivalent.

Une cellule de pesée 8, ou un dispositif équivalent tel que jauges de contraintes, provoque la fermeture par exemple mais non limitativement, de la vanne de sécurité 2 et de la vanne de régulation de fluide moteur 6 en cas de conditions normales de fonctionnement ou de débattements latéraux anormaux du ballon-dégazeur 3 sous l'effet par exemple de tractions d'ancres, filets de pêche, ou autre, isolant ainsi par exemple le puits de production et la canalisation de fluide moteur sous pression.

La partie de l'installation de production située en surface peut être contenue dans les ponts 22 supportés par une structure métallique (jacket) ou autre, dépassant le niveau de la mer 23, tel que représenté, ou dans tout autre type de support fixe ou flottant, dépassant ou non le niveau de la mer, voire même située à terre.

Le ballon-dégazeur 3, l'ensemble moto-pompe de fond 4, 5, et leurs accessoires, sont maintenus sur le fond de la mer par une structure lest 7 ou par tout autre moyen propre à supporter le poids de l'ensemble et les différences de flottabilité dudit ballon-dégazeur, cette structure pouvant éventuellement faire partie de la structure de la tête du puits de production ou y être articulée de façon à faciliter les opérations de mise en place et de relevage éventuelles.

A la condition que des vannes de sectionnement ou des clapets soient placées sur les différentes canalisations de liaison à l'ensemble moto-pompe 4, 5 et non représentées pour des raisons de clarté, le susdit ensemble moto-pompe peut constituer un sous-ensemble relevable pour entretien, échange, ancré par des moyens classiques 25 dans un réceptacle 26.

On obtient ainsi un procédé de production simple, et de grande souplesse de fonctionnement dont les parties pouvant subir une usure rapide peuvent être échangées durant la vie du gisement et caractérisé principalement par les avantages suivants:

1 — Si, en début de vie, le puits dispose d'une pression suffisante permettant d'atteindre les installations de surface au débit souhaité, le groupe moto-pompe 4, 5 ne sera pas installé, et sera remplacé par un simple bouchon 25, le groupe moto-pompe étant descendu ultérieurement dès lors que le débit naturel du puits ne sera plus satisfaisant.

2 — Le débit du puits, fonction de sa pression en tête, aura sa régulation assurée par une vanne 11 localisée en surface permettant tous les ajustements souhaitables y compris, permettant d'abaisser la pression en tête de puits sous-marine jusqu'à une valeur voisine de la pression atmosphèrique régnant à la profondeur de la tête du puits, mais compte-tenu de la densité du gaz séparé dans le ballon 3.

3 — La régulation du débit d'évacuation est autonome et assurée par la flottabilité relative du ballon dégazeur 3.

4 — Ce procédé permet l'exploitation de gisements très oblongs et/ou également situés sous une faible épaisseur de mort-terrains difficilement exploitables ou non rentables par l'utilisation de procédés classiques.

5 — Le moteur 5 de la pompe de relevage 4 peut être électrique, la détection de flottabilité du ballon-dégazeur 3 actionnant alors une variation d'intensité ou de voltage du courant d'alimentation du moteur 5, la canalisation 14 étant remplacée par un câble d'alimentation électrique relié en surface à un générateur. En outre la susdite détection de flottabilité peut être transformée en modulation électrique ou autre et transmise en surface, par câble ou fibre optique, permettant de moduler en surface la puissance transmise au moteur. Finalement, deux types de détection de flottabilité peuvent être installés simultanément, l'un en secours de l'autre.

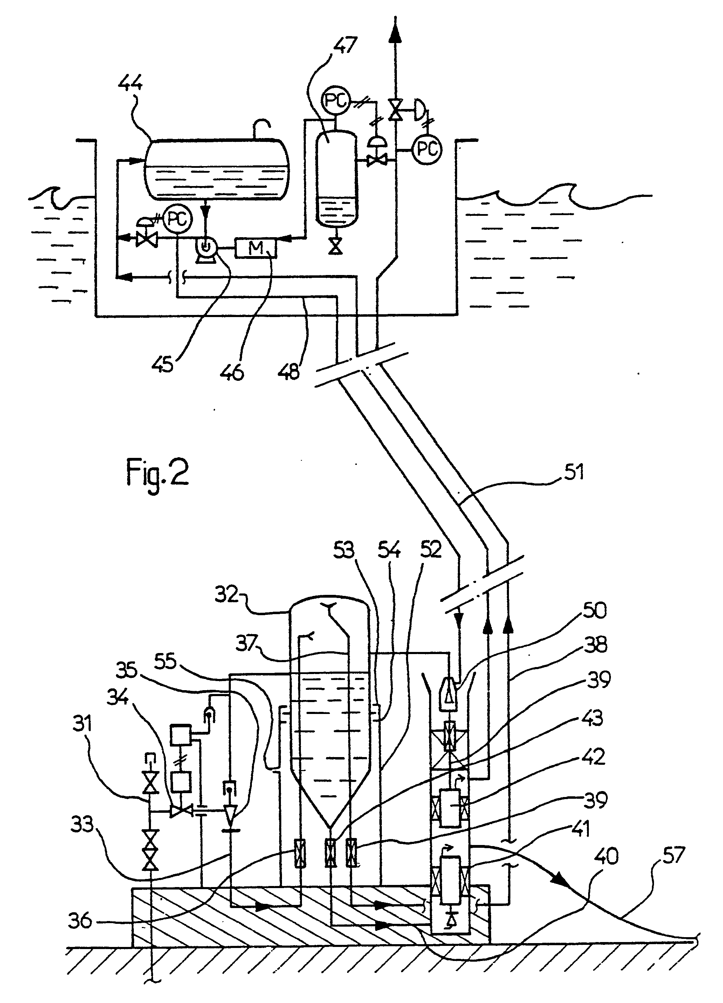

Avec référence à la figure 2, le système selon l'invention fait appel:

A) à un ensemble de circulation de l'effluent constitué principalement:

— d'un ou plusieurs puits 31 raccordé au ballon-dégazeur 32 par au moins une canalisation 33 équipée de vanne de sectionnement de sécurité 34 redoublée par un dispositif 35 pinçant la veine fluide et d'un joint coulissant 36 de course suffisante pour permettre les débattements verticaux du ballon-dégazeur,

— du ballon-dégazeur 32 équipé d'une sortie de gaz 37 raccordée en surface par une canalisation 38 qui peut être rigide, équipée d'un joint coulissant 39 et,

— d'une sortie d'effluent liquide 40, équipée d'un joint coulissant 43 raccordé à l'aspiration d'un ensemble moto-pompe hydraulique 41, 42 dont le refoulement débouche dans une canalisation d'évacuation 57,

B) — à un ensemble moteur hydraulique, comprenant, en surface, un réservoir tampon de fluide hydraulique 44 alimentant une pompe 45 éventuellement entraînée par un moteur 46 utilisant le gaz produit récupéré et traité en 47 par des moyens classiques et une canalisation 48 d'amenée du fluide hydraulique à l'entrée 49 du moteur hydraulique 42 de la pompe de fond, au travers d'une vanne 50 pinçant la veine de fluide hydraulique sous l'effet des variations de flottabilité du ballon-dégazeur 32.

Après passage au travers du moteur hydraulique 42, le fluide moteur est réacheminé en surface, au réservoir tampon 44 par la canalisation 51. Le ballon-dégazeur 32 peut coulisser verticalement dans une jupe 52 limitant les débattements dudit ballon-dégazeur par des butées hautes et basses 53, 54. Le fluide contenu dans cette jupe peut s'en échapper ou y rentrer par exemple par un orifice 55, amortissant ainsi les mouvements verticaux du ballon-dégazeur 32. L'ensemble du dispositif repose et est ancré sur le fond de la mer par une embase lest 56 pouvant servir également de plaque de base pour la/ou les têtes de puits 31. Le ballon-dégazeur 32 ainsi que la moto-pompe de fond peuvent être relevés depuis la surface pour réparation, entretien et échange.

L'ensemble d'injection de fluide moteur, de récupération et mise à l'atmosphère éventuelle de l'effluent gazeux, peut être localisé dans une structure support située à proximité ou à distance du/ou des puits, alors que la canalisation d'évacuation de l'effluent liquide 57 peut acheminer ce dernier dans une installation de traitement stockage située en un autre lieu, voire même à terre.

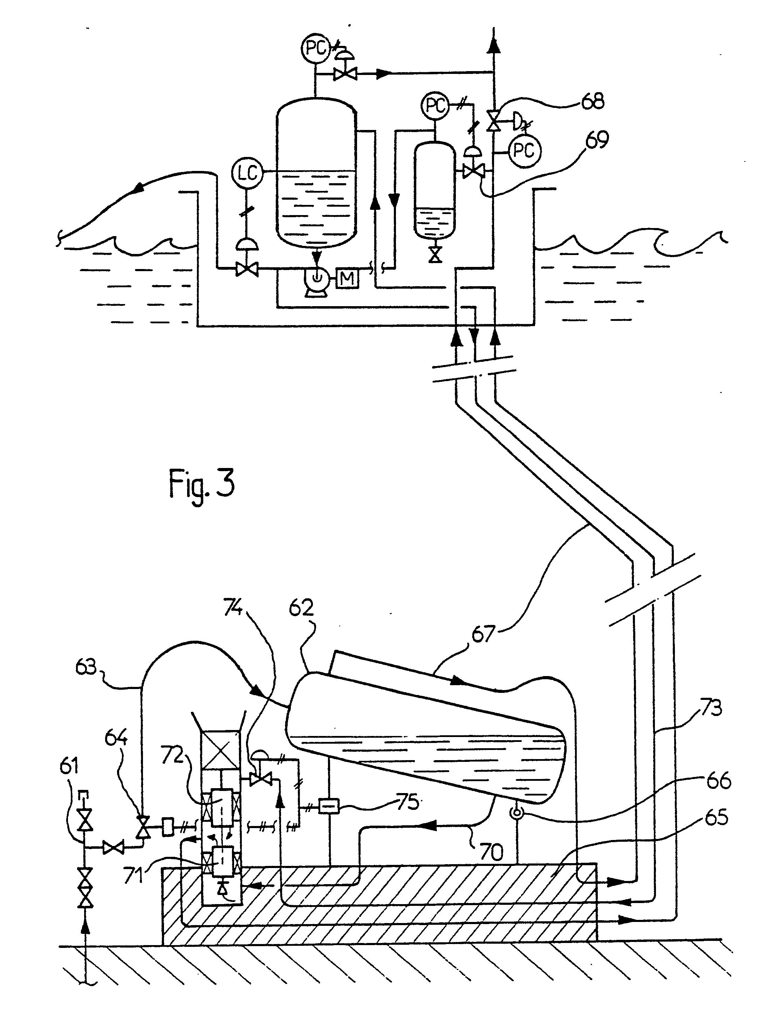

Avec référence à la figure 3 un autre arrangement du système selon l'invention est développé. La/ou les têtes de production sous-marine 61 est reliée au ballon-dégazeur 62 par une canalisation flexible 63 équipée d'une vanne de sectionnement de sécurité 64. Le ballon-dégazeur 62 est fixé à une embase lest 65 par une charnière 66 d'axe sensiblement horizontal, l'axe principal du ballon-dégazeur étant incliné sur l'horizontale de façon à pouvoir créer une flottabilité sensiblement plus importante de l'extrémité du ballon-dégazeur opposée à celle équipée de la susdite charnière. Le ballon-dégazeur 62 comporte une canalisation flexible 67 d'évacuation du gaz jusqu'en surface équipée d'une vanne 68 contrôlant la pression dans le ballon-dégazeur et accessoirement, si nécessaire, d'une vanne 69 permettant de prélever ou récupérer le gaz aux fins de l'utiliser comme carburant, fluide moteur ou de le commercialiser. La sortie liquide 70 du ballon-dégazeur 62 est raccordée à un groupe moto-pompe 71, 72 par une canalisation flexible. L'alimentation 73 en fluide moteur du groupe moto-pompe est régulée, selon le niveau dans le ballon-dégazeur 62 par une vanne 74 pilotée par une cellule de détection 75 des variations de flottabilité dudit ballon-dégazeur 62. Accessoirement la cellule de détection 75 peut actionner la vanne de sectionnement de sécurité 64 ou toute autre vanne de sécurité jugée nécessaire.

Dans l'éventualité où le moteur 72 du groupe moto-pompe serait électrique, la canalisation 73 sera remplacée par un câble électrique relié en surface à un générateur. Dans tous les cas, la cellule de détection de poids ou de flottabilité 75 peut être équipée de câble ou de fibre de transmission d'information jusqu'en surface, la vanne 74 ou la modulation de puissance électrique étant alors déplacée en surface.

On notera que dans l'exemple précédemment décrit, il serait possible d'utiliser au lieu de la charnière 66 une structure élastiquement déformable pouvant à la limite constituer le support du ballon-dégazeur 62.

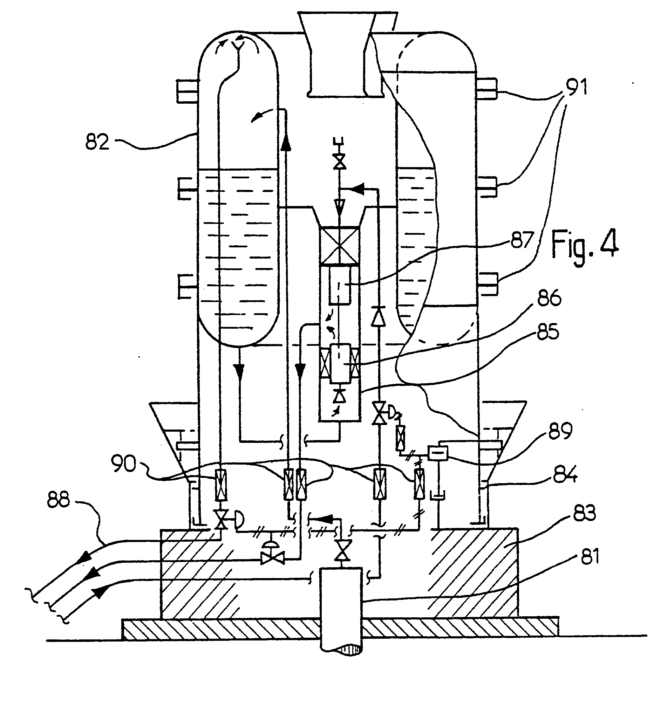

Avec référence à la figure 4, un arrangement compact, utilisant le procédé, centré par exemple sur une tête de production, est développé dans le but de faciliter les manoeuvres de mise en place et retrait des différents éléments. Il comporte une ou plusieurs têtes de puits 81 raccordée à un ballon-dégazeur 82 de forme torique de grand axe vertical, retenu par une embase lest 83 par des verrouillages classiques 84 permettant toutefois, de détecter les variations de poids ou de flottabilité dudit ballon-dégazeur 82. Dans son évidement intérieur, le ballon-dégazeur est équipé d'un réceptacle 85 permettant de fixer la moto-pompe d'évacuation 86, 87, de l'effluent liquide.

Comme dans les exemples précédents la régulation de pression en tête de puits et, par conséquent, du débit du puits peut être effectuée depuis la surface par un dispositif de contrôle de pression placé sur la canalisation d'évacuation 88 de l'effluent gazeux, le débit d'évacuation de l'effluent liquide étant régulé à partir des fluctuations de niveau dans le ballon-dégazeur par l'intermédiaire d'une cellule de détection de poids ou de flottabilité 89 actionnant les variations de puissance du moteur 87 du groupe moto-pompe de relevage. Tous les raccordements de canalisations entre l'embase lest 83 et le ballon-dégazeur 82 sont effectués par l'intermédiaire de joints coulissants 90 ou de canalisations flexibles. Si nécessaire, les fluctuations de flottabilité du ballon-dégazeur 82 peuvent être amorties par des cerclages 91 freinant les mouvements dans l'eau et aussi participant à la résistance à l'écrasement du ballon-dégazeur.

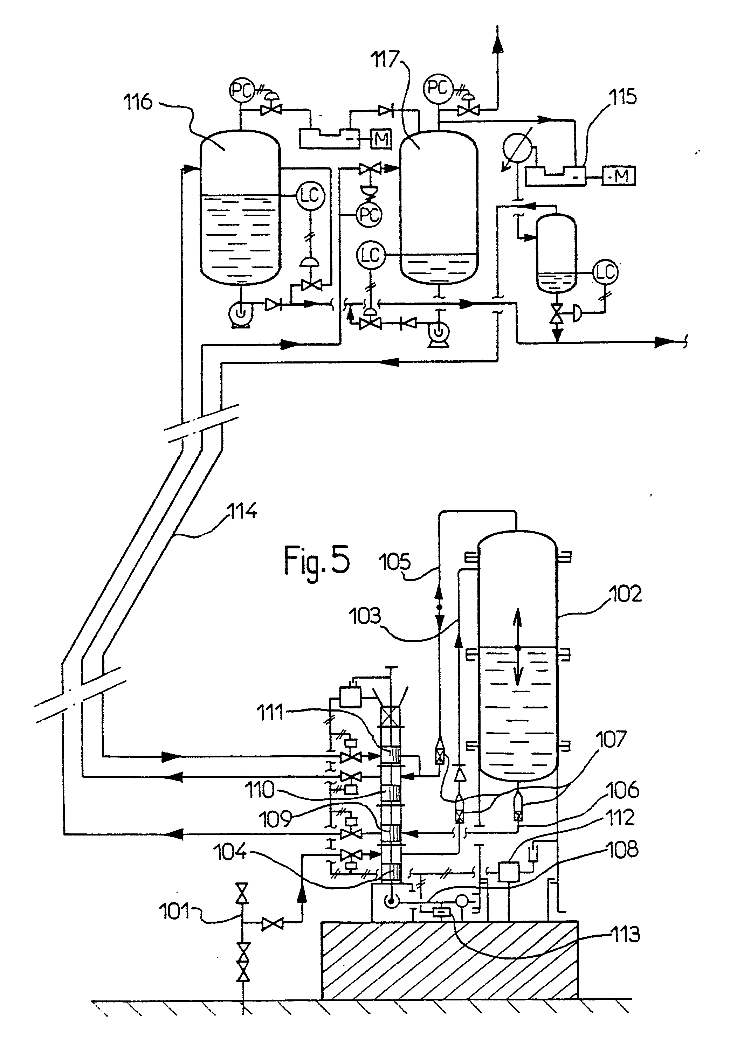

La figure 5 est un exemple d'application de l'invention à des puits pouvant subir des discontinuités de production justifiables, par exemple, par une mauvaise alimentation du puits par la couche productrice ou une viscosité trop élevée de l'effluent. Le déplacement de l'effluent du puits, depuis le ballon-dégazeur, jusqu'en surface est obtenu par une chasse à gaz (blow case), la succession des alternances de débits et de chasses étant commandée par les variations de flottabilité du ballon-dégazeur opérant alternativement un tiroir de distribution de l'effluent du puits, de l'effluent liquide chassé, de l'effluent gazeux et du gaz de chasse. L'installation comporte donc une tête de production 101 reliée au ballon-dégazeur à flottabilité variable 102 par une canalisation 103 équipée d'un tiroir 104, un ballon-dégazeur 102 à flottabilité variant avec le niveau liquide à l'intérieur de celui-ci, dont les entrées effluent du puits 103, sortie-entrée gaz 105 et sortie liquide 106 sont munies de joints coulissants 107, ou raccordées par canalisations flexibles aux parties fixes de l'installation. Les mouvements du ballon-dégazeur actionnent un levier 108 ou tout autre moyen provoquant la translation du tiroir 104 d'entrée d'effluent du puits, du tiroir 109 de sortie d'effluent liquide, du tiroir 110 de sortie d'effluent gazeux, et du tiroir 111 d'alimentation en gaz de chasse.

Un détecteur de mouvements latéraux anormaux 112 du ballon-dégazeur 102 et un détecteur 113 de position anormale du levier 108 de commande des tiroirs peuvent éventuellement permettre d'assurer la mise en sécurité de l'installation.

L'alimentation en gaz de chasse est effectuée par une canalisation 144 amenant celui-ci depuis une unité de compression 115 située en surface, à proximité ou non de l'axe de la tête de puits. Le gaz utilisé dans ce procédé peut être le gaz associé à l'effluent liquide du puits et récupéré en 116 et 117 et recyclé, aussi bien que du gaz provenant d'autres puits ou d'autres gisements, voire même du gaz fabriqué en surface tel que de l'azote ou autre. Une partie du gaz produit peut même être consommée pour alimenter en énergie les compresseurs et les éléments nécessaires au fonctionnement de l'installation, l'excédent de gaz étant torché à l'atmosphère ou expédié.

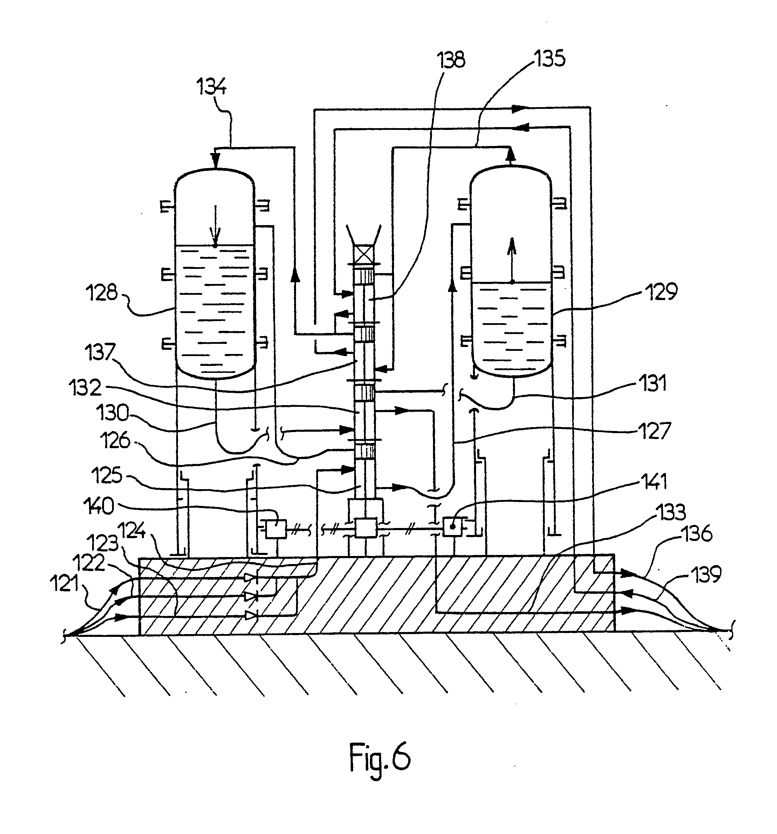

La figure 6 est une extension du système décrit dans la figure précédente, applicable plus particulièrement à un ou plusieurs puits dont on ne désire pas arrêter la production pendant les périodes de relevage de l'effluent jusqu'aux installations de traitement et de stockage. Elle est basée sur l'utilisation d'une chasse au gaz comme développé dans l'exemple de la figure 5, mais met en oeuvre au moins deux ballons-dégazeurs dont l'un sera en séquence de remplissage pendant que l'autre sera en séquence de chasse, les séquences des phases remplissage et vidange des deux ballons-dégazeurs pouvant être commandées par un même ensemble de tiroirs de pilotage.

Selon le type du gisement, les qualités de l'effluent et la régularité du débit à assurer, l'installation selon l'invention peut comporter une pluralité de ballons-dégazeurs reliés à un même puits, de même qu'elle peut comporter une pluralité de puits raccordés à un même couple de ballons-dégazeurs.

Dans la représentation de la figure 6, l'installation comporte par exemple trois arrivées de puits 121, 122, 123 réunies ensemble par la canalisation 124 débouchant dans un tiroir 125 raccordé aux entrées 126 et 127 des ballons-dégazeurs 128 et 129, le ballon 128 étant en cours de chasse et le ballon 129 en cours de remplissage par les puits. Les sorties d'effluent liquide 130 et 131 sont raccordées à une canalisation d'évacuation des liquides 133 en surface par l'intermédiaire d'un tiroir 132.

Les sorties d'effluent gazeux 134 et 135 sont raccordées à une canalisation d'évacuation des gaz en surface 136 par l'intermédiaire d'un tiroir 137 et la canalisation d'arrivée 139 de gaz de chasse est raccordée aux canalisation 134 et 135 par l'intermédiaire d'un tiroir 138. Des cellules de détection de variation de poids ou de flottabilité 140 et 141 provoquent la manoeuvre de l'ensemble des tiroirs. La régulation du débit des puits, fonction de leur pression en tête est assurée par une vanne de régulation de pression placée, par exemple mais non limitativement en surface sur la canalisation 136.

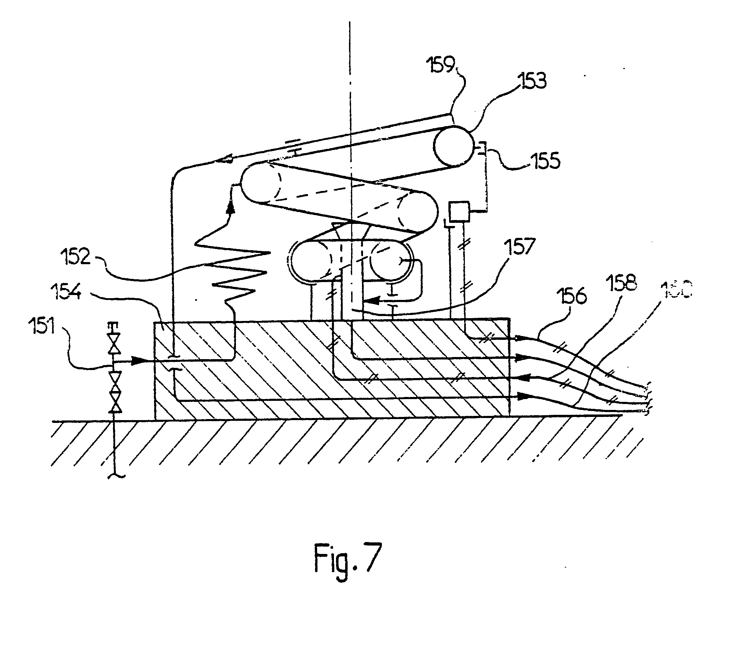

Avec référence à la figure 7, le système met en oeuvre:
— un puits 151 raccordé au ballon-dégazeur 153 par une canalisation 152 dont une partie est une spirale conique permettant, d'une part, par élasticité, un mouvement relatif de son extrémité supérieure par rapport à l'embase lest 154, et, d'autre part, constitue un échangeur de chaleur avec le milieu dans lequel elle trempe, la mer par exemple;
— Le ballon-dégazeur 153 en forme de spirale conique dont l'extrémité inférieure est fixée dans l'embase lest, et dont l'extrémité supérieure est un libre flottabilité.

La forme donnée au ballon-dégazeur permet un large échange thermique avec le milieu extérieur, une surface importante de dégazage de l'effluent, et des variations de déplacement détectables de l'extrémité supérieure du ballon-séparateur sous l'effet des variations de flottabilité conséquences des variations de niveau du liquide qu'il contient. Ces variations de déplacement sont suivies par un détecteur 155 les transmettant en surface par un câble ou une fibre optique 156 afin de moduler la puissance motrice transmise à la pompe 157 par un câble de puissance 158. La sortie gaz 159 du ballon-dégazeur 153 est reliée par une canalisation 160 partiellement flexible, à la surface, où une vanne de régulation de pression permet d'ajuster le débit du puits à la valeur désirée.

**Revendications**

1. Système d'exploitation des gisements de fluides, destiné principalement à permettre la production et à augmenter la récupération des fluides en place, ledit système comprenant au moins un puits d'exploitation (1) dont la tête de production est reliée par une conduite rigide ou flexible à au moins un séparateur immergé (3) situé au voisinage de la tête de production, et caractérisé en ce que ledit séparateur est un ballon-dégazeur (3) qui est monté flottant de manière à pouvoir s'enfoncer plus ou moins profondément en fonction du poids des produits liquides qui y sont contenus, et en ce qu'elle comprend en outre;

— un moyen de relevage (4) destiné à évacuer les produits liquides du ballon-dégazeur vers une canalisation d'évacuation (13),

— un moyen de régulation (6) du débit des liquides évacués du ballon-dégazeur, ledit moyen étant sensible aux variations de flottabilité de ce dernier en fonction du poids de produits liquides qu'il contient, et

— un dispositif de régulation du débit du puits (1), comprenant des moyens (11, 18) pilotés par la pression du gaz contenu dans le ballon-dégazeur (3) permettant d'effectuer une modulation de la pression du ciel de gaz naturel ou artificiel créé dans ledit ballon dégazeur, en pinçant la canalisation d'évacuation de gaz (12) en n'importe lequel de ses points jusqu'à l'atmosphère ou jusqu'à des installations de recueil de gaz si ce dernier est traité pour l'utilisation et/ou la récupération des fractions liquides condensables qu'il contient.

2. Système selon la revendication 1, caractérisé en ce que les canalisations entrant dans, et sortant de l'installation sont équipées de vannes de manoeuvre et de sectionnement de sécurité opérées par les variations de flottabilité et/ou de poids du ballon-dégazeur (3) et/ou, à distance, volontairement et en ce qu'il comprend, en outre un système de détection de mouvements latéraux anormaux du ballon-dégazeur (3) permettant d'actionner lesdites vannes afin de protéger l'installation, de toute agression du milieu extérieur.

3. Système selon la revendication 1, caractérisé en ce que le moyen de relevage de l'effluent consiste en un groupe moto-pompe (4, 5), relevable depuis la surface indépendamment des autres éléments de l'installation, et dont le moteur (5) est de préférence constitué d'une turbine hydraulique dont l'arrivée de fluide moteur est régulée par ledit moyen de régulation piloté mécaniquement par les variations de flottabilité du ballon-dégazeur (3).

4. Système selon l'une des revendications 1 et 3, caractérisé en ce que ledit moyen de régulation est constitué par une vanne (6) ou un clapet de régulation du fluide moteur localisé à distance du ballon-dégazeur (3) et de la pompe de relevage (4), en surface et/ou à distance, les variations de flottabilité ou de poids du ballon-dégazeur (3) étant transmises à ladite vanne par un moyen de transmission propre à assurer un fonctionnement régulier du procédé, tel que transmission pneumatique, électrique, hydraulique, électronique, fibre optique, ou autre, plusieurs de ces moyens pouvant être conjugués simultanément afin de s'assurer d'une liaison permanente.

5. Système selon l'une des revendications 1 et 4, caractérisé en ce que le moyen de relevage de l'effluent est un groupe moto-pompe (4, 5), relevable depuis la surface indépendamment des autres éléments de l'installation et dont le moteur (5) est électrique dont la puissance d'alimentation est conditionnée par les variations de poids ou de flottabilité du ballon-dégazeur (3) transmises en surface.

6. Système selon l'une des revendications 1, 3 et 4, caractérisé en ce que le fluide moteur consiste en l'effluent lui-même, recyclé et remélangé à l'effluent brut à la sortie de la pompe de relevage (4) ou en un fluide particulier circulant en circuit fermé différent de celui de l'effluent du/ou des puits (1).

7. Système selon l'une des revendications précédentes, caractérisé en ce que le ballon-dégazeur (3) a un degré de liberté en translation verticale ou en rotation autour d'un axe horizontal ou bien est monté sur un support élastiquement déformable.

8. Système selon l'une des revendications précédentes, caractérisé en ce que le ballon-dégazeur (82) est construit en forme de tore d'axe principal vertical formant une structure protectrice autour de la tête de puits et des autres éléments de l'installation placé dans l'évidement central dudit ballon (82).

9. Système selon l'une des revendications 1 à 6, caractérisé en ce que le ballon-dégazeur (153) est fixé à l'embase lest (154) et est enroulé en spirale conique de façon à permettre, par élasticité, des mouvements ou des efforts détectables, de son extrémité supérieure et aussi constituer un échangeur de chaleur avec le milieu extérieur.

10. Système selon l'une des revendications 1 et 2, caractérisé en ce que le relevage de l'effluent liquide est effectué par une chasse au gaz alternée avec une période de remplissage, l'installation pouvant comporter plusieurs ballons-dégazeurs (128, 129) de façon à assurer une continuité du débit du/ou des puits qui y sont raccordés.

11. Système selon l'une des revendications précédentes, caractérisé en ce que plusieurs puits (1) sont raccordés à un même ballon-dégazeur (3) et qu'un seul puits (1) peut être raccordé à plusieurs ballons-dégazeurs (3), et aussi bien plusieurs moyens de relevage à un même ballon-dégazeur que un seul moyen de relevage de l'effluent liquide à plusieurs ballons-dégazeurs.

**Patentansprüche**

1. System zum Ausbeuten von aus flüssigen oder gasförmigen Medien bestehenden Lagerstätten, durch das hauptsächlich die flüssigen oder gasförmigen Medien gefördert und deren Ausbeute gesteigert werden kann und das zumindest einen Förderschacht (1) aufweist, dessen Förderkopf über eine starre oder flexible Leitung mit zumindest einem in der Nähe des Förderkopfes eingetauchten Abscheider (3) verbunden ist, dadurch gekennzeichnet, daß als Abscheider ein Entgasungsgefäß (3) verwendet wird, das derart schwimmend montiert ist, daß es in Abhängigkeit vom Gewicht der in ihm aufgenommenen flüssigen Fördermengen mehr oder minder tief abgesenkt werden kann, und gekennzeichnet durch

— Hebeeinrichtungen (4), durch die die geförderte Flüssigkeit an eine Austragsrohrleitung (13) abgeführt werden,

— Regeleinrichtungen (6) für die aus dem Entgasungsgefäß abgeführten Durchsatzmengen, wobei diese Regeleinrichtungen auf Änderungen der Schwimmfähigkeit des Gefäßes in Abhängigkeit vom Gewicht der Flüssigkeit anspricht, das im Gefäß enthalten ist, und durch

— eine Regelvorrichtung für den Durchsatz aus der Förderquelle (1) mit Einrichtungen (11, 18), die vom Druck des im Gefäß (3) enthaltenen Gases gesteuert werden, wodurch der Druck der natürlichen oder künstlichen im Gefäß geschaffenen Gasdecke dadurch moduliert werden kann, daß die Austragrohrleitung (12) an einem beliebigen Punkt bis auf atmosphärischen Druck oder bis zu einer Auffanganlage für das Gas abgedrückt wird, wenn es zur Nutzung und/oder Rückgewinnung der in ihm enthaltenen kondensierbaren Flüssigkeitsfraktionen behandelt wird.

2. System nach Anspruch 1, dadurch gekennzeichnet, daß die in die Anlage hineingehenden und herausführenden Rohrleitungen mit Stell- und Trennschiebern oder -schützen versehen sind, die durch Veränderungen der Schwimmfähigkeit und/oder dem Gewicht des Gefäßes (3) nach Wunsch betätigt und/oder ferngesteuert werden, und gekennzeichnet durch ein System zum Erfassen von anormalen Seitenbewegungen der Schieber oder Schütze, so daß die Anlage gegenüber Einwirkungen von außen geschützt wird.

3. System nach Anspruch 1, dadurch gekennzeichnet, daß die Hebeeinrichtungen für die Abgänge aus einer Motorpumpeneinheit (4, 5) bestehen, die von der Oberfläche aus unabhängig von den anderen Bauteilen der Anlage anhebbar sind und der Motor (5) vorzugsweise als Wasserturbine gestaltet ist, wobei die Zuführung des Treibmittels von den Regeleinrichtungen geregelt wird, die nach den Schwankungen der Schwimmfähigkeit von Gefäß (3) mechanisch gesteuert werden.

4. System nach einem der Ansprüche 1 und 3, dadurch gekennzeichnet, daß als Regeleinrichtungen ein vom Gefäß (3) und von der an der Oberfläche und/oder entfernt angeordnetes Schütz (6) oder ein Regelventil für das Treibmittel verwendet wird, wobei die Schwankungen der Schwimmfähigkeit und des Gewichts des Gefäßes (3) durch geeignete Übertragungsmittel weitergegeben werden, um einen geregelten Betrieb zu gewährleisten, und wobei die Übertragung auf pneumatischem, elektrischem, hydraulischem, elektronischem, faseroptischem oder diesen ähnlichem Wege geschehen kann, indem auch mehrere Mittel gleichzeitig miteinander verknüpft werden können, um eine permanente Verbindung herzustellen.

5. System nach einem der Ansprüche 1 und 4, dadurch gekennzeichnet, daß als Einrichtungen zum Heben des abströmenden flüssigen Mediums eine Motorpumpeneinheit (4, 5) verwendet wird, das unabhängig von den anderen Bauteilen der Anlage von der Oberfläche aus gehoben werden kann, und daß der Motor (5) ein Elektromotor ist, dessen Speiseleistung abhängig gehalten wird von den Schwankungen des Gewichts und der Schwimmfähigkeit des Entgasungsgefäßes (3), die an die Oberfläche übermittelt werden.

6. System nach einem der Ansprüche 1, 3 und 4, dadurch gekennzeichnet, daß das Treibmittel aus dem abgeströmten Medium oder Abgang selbst besteht, das bzw. der den Rohausströmen am Ausgang der Hebepumpe (4) oder an ein besonderes flüssiges Medium zurückgeführt und neu beigemengt wird, das als ein sich von dem Abgang des oder der Förderquellen (1) unterscheidendes besonderes Strömungsmittel in einem geschlossenen Kreis umläuft.

7. System nach einem der vorhergehenden Ansprüche, dadurch gekennzeichnet, daß das Entgasungsgefäß (3) in der vertikalen Verschiebung und der Drehung um eine horizontale Achse einen Freiheitsgrad aufweist oder daß es auf einem elastisch verformbaren Träger eingesetzt ist.

8. System nach einem der vorhergehenden Ansprüche, dadurch gekennzeichnet, daß das Engasungsgefäß (82) als Torus mit senkrechter Hauptachse ausgestaltet ist, der um den Förderkopf und die anderen Bauteile der in der mittigen Ausnehmung des Gefäßes (82) angeordneten Anlage einen schützenden Aufbau bildet.

9. System nach einem der Ansprüche 1 bis 6, dadurch gekennzeichnet, daß das Entgasungsgefäß (153) am Ballastfuß (154) befestigt ist und sich davon in einer konischen Spirale hochwindet, so daß bedingt durch die Elastizität erfaßbare Bewegungen und Kräfte von bzw. an seinem oberen Ende möglich sind und somit auch ein Wärmeaustauscher zur Umgebung geschaffen ist.

10. System nach einem der Ansprüche 1 und 2, dadurch gekennzeichnet, daß das Heben der abgehenden Flüssigkeit durch eine mit einer Periode der Neuauffüllung alternierenden Gasaustreibung durchgeführt wird, wobei die Anlage mehrere Entgasungsgefäße (128, 129) aufweisen kann, so daß eine kontinuierliche Förderleistung der an diese angeschlossenen Quelle oder Quellen gewährleistet ist.

11. System nach einem der vorhergehenden Ansprüche, dadurch gekennzeichnet, daß mehrere Quellen (1) an ein und demselben Entgasungsgefäß (3) liegen und daß auch nur eine Quelle (1) an mehrere Entgasungsgefäße (3) und ebenso gut mehrere Hebeeinrichtungen an ein und dasselbe Entgasungsgefäß wie nur eine Hebeeinrichtung der abgehenden Flüssigkeit an mehrere Entgasungsgefäße angeschlossen werden können.

## Claims

1. A system for working deposits of fluids, which is intended primarily to permit production and to enhance recovery of the fluids in situ, said system comprising at least one working well (1) whose production head is connected by a rigid or flexible conduit to at least one immersed separator (3) which is disposed in the vicinity of the production head, and characterised in that said separator is a degasser vessel (3) which is mounted floatingly so that it can sink to a greater or lesser depth in dependence on the weight of the liquid substances contained therein, and that it further comprises:

— a lifting means (4) for discharging the liquid substances from the degasser vessel to a discharge conduit (13),

— a means (6) for regulating the flow rate of the liquids discharged from the degasser vessel, said regulating means being responsive to the variations in buoyancy of the degasser vessel in dependence on the weight of the liquid substances that it contains, and

— a device for regulating the flow rate of the well (1) comprising means (11, 18) which are pilot-controlled by the pressure of the gas contained in the degasser vessel (3), permitting modulation of the pressure of the natural or artificial gas ceiling created in said degasser vessel, by pinching off the gas discharge conduit (12) at any of its points to the atmosphere or to installations for collecting gas if the latter is treated for use and/or for recovery of the condensable liquid fractions that it contains.

2. A system according to claim 1 characterised in that the conduits passing into and issuing from the installation are provided with operating and safety isolating valves which are operated by the variations in buoyancy and/or weight of the degasser vessel (3) and/or, under remote control, voluntarily, and that it further comprises a system for detecting abnormal lateral movements of the degasser vessel (3), permitting said valves to be actuated in order to protect the installation from any attack by the outside medium.

3. A system according to claim 1 characterised in that the means for lifting the effluent material consists of a motor-pump unit (4, 5) which can be lifted from the surface independently of the other elements of the installation and whose motor (5) preferably comprises a hydraulic turbine, the drive fluid intake of which is regulated by said regulating means which is pilot-controlled mechanically by the variations in buoyancy of the degasser vessel (3).

4. A system according to one of claims 1 and 3 characterised in that said regulating means comprises a valve (6) or shut-off device for regulating the motor fluid which is located remotely from the degasser vessel (3) and the lifting pump (4), at the surface and/or remotely, the variations in buoyancy or weight of the degasser vessel (3) being transmitted to said valve by a transmission means for ensuring regular operation of the process, such as pneumatic, electrical, hydraulic, electronic, optical fibre or other transmission means, wherein a plurality of said means may be simultaneously combined in order to ensure a permanent connection.

5. A system according to one of claims 1 and 4 characterised in that the means for lifting the effluent material is a motor-pump unit (4, 5) which can be lifted from the surface independently of the other elements of the installation and whose motor (5) is electrical, the supply power of the motor being governed by the variations in weight or buoyancy of the degasser vessel (3), which are transmitted to the surface.

6. A system according to one of claims 1, 3 and 4 characterised in that the motor fluid consists of the effluent itself, being recycled and re-mixed with the crude effluent at the discharge of the lifting pump (4), or a particular fluid which flows in a closed circuit which is different from that for the effluent material from the well or wells (1).

7. A system according to one of the preceding claims characterised in that the degasser vessel (3) has a degree of liberty in respect of vertical translation or rotation about a horizontal axis or else is mounted on a resiliently deformable support.

8. A system according to one of the preceding claims characterised in that the degasser vessel (82) is designed in the form of a torus with its main axis vertical, forming a protective structure around the well head and the other elements of the installation, being positioned in the central opening of said vessel (82).

9. A system according to one of claims 1 to 6 characterised in that the degasser vessel (153) is fixed to the ballast base (154) and is wound in the configuration of a conical spiral in such a way as to permit by elasticity detectable movements or forces in respect of its upper end and also to form a heat exchanger with the outside medium.

10. A system according to one of claims 1 and 2 characterised in that the operation of lifting the liquid effluent is effected by gas flushing alternated with a filling period, wherein the installation may comprise a plurality of degasser vessels (128, 129) so as to ensure continuity in the flow of the well or wells connected thereto.

11. A system according to one of the preceding claims characterised in that a plurality of wells (1) are connected to the same degasser vessel (3) and that a single well (1) may be connected to a plurality of degasser vessels (3) and both a plurality of lifting means to the same degasser vessel and a single lifting means for the liquid effluent to a plurality of degasser vessels.

Fig.1

Fig.2

Fig. 3

Fig. 4

Fig. 5

Fig.6

Fig. 7